# EUROPEAN PATENT SPECIFICATION

(11) **EP 2 809 713 B1**
(45) Date of publication and mention of the grant of the patent: **27.01.2016**
(21) Application number: 13702637.3
(22) Date of filing: 01.02.2013
(51) Int. Cl.: C08J 9/00, B32B 15/08, B32B 21/08, E04C 2/296

(54) **COMPOSITE FIBRE PANEL**
VERBUNDFASERPLATTE
PANNEAU COMPOSITE FIBREUX

(30) Priority: 03.02.2012 GB 201201885
(43) Date of publication of application: 10.12.2014
(73) Proprietor: Knauf Insulation, 4600 Visé (BE)
(72) Inventor: SEBENIK, Gorazd, B-1435 Mont-Saint-Guibert (BE); SUMI, Jure, B-1435 Mont-Saint-Guibert (BE); KESE, Miha, B-1435 Mont-Saint-Guibert (BE); LUZNIK, Tomaz, B-1435 Mont-Saint-Guibert (BE)
(74) Representative: Farmer, Guy Dominic
(86) International application number: PCT/EP2013/052103
(87) International publication number: WO 2013/113912

(56) References cited:
- WO-A1-2007/114786
- DE-A1-102005 060 744

## Description

This invention relates to a composite fibre panel, in particular an acoustic panel, especially for use in door constructions, floor insulation or sandwich panels.

One known form of panel used in doors comprises a mixture of coconut fibres, polyurethane (PU) foam, particulate rubber and glue. The heterogeneous nature of these panels contributes to their good sound absorbing properties and the availability of their constituent parts allows their manufacture at moderate cost.

US4256803A discloses a panel having an expanded phenolic resin core incorporating fillers and a polycondensed phenolic resin layer outer covering layer which is reinforced with glass fibre fabric.

JP2009052033 discloses a thermoplastic resin composition for expansion moulding which incorporates wood flour and a filler.

The panels disclosed in US4256803A and JP2009052033 are not adapted to provide advantageous sound absorbing properties, nor to be used in the specific applications envisaged for the present invention.

WO 2007114786 discloses a composite fibre panel comprising mineral fibres and polymeric material.

One aim of the present invention is to provide panels which can match the acoustic performance and cost of known panels but also provide additional advantages.

According to one aspect, the present invention provides a composite fibre panel as defined in claim 1. Other aspects are defined in other dependent claims whilst the dependent claims define preferred and/or alternative embodiments.

The use of mineral fibres, for example stone wool fibres or glass wool fibres, in the quantities specified may be used to confer advantageous fire resistance and/or good levels of compressive strength and/or low thermal conductivity upon the panels.

Each of these properties, either individually or combined, is particularly useful when the composite panels are used in doors or sandwich panels.

The combination of different materials in the composite fibre panels contributes to their ability to absorb sound and thus to their acoustic performance. A foam material included as part of the polymeric material serves such a purpose as does a polymeric material in particulate form and as does the combination of these materials. The foam may have a closed cell structure or an open cell structure or a combination thereof; it may comprise polyurethane foam, expanded polystyrene foam (EPS), extruded polystyrene foam (XPS) or mixtures thereof. The polymeric material in particulate form may be in the form of particles, preferably particles of different sizes, and may be provided as scraps or recycled material; the polymeric material in particulate form may comprise rubber(s), natural rubber(s), synthetic rubber(s), polyurethane, elastomer(s) or mixtures thereof. The mean geometric diameter of the polymeric material in particulate form may be ≥ 0.1 mm or ≥ 0.2mm or ≥ 0.5mm or ≥ 1 mm or ≥ 2mm. The mean geometric diameter of the polymeric material in particulate form may be ≤ 30mm or ≤ 20mm or ≤ 10mm or ≤ 5mm.

The provision of a composite fibre panel having a height of at least 160 cm and a width of at least 60cm allows the panel to be used without requiring additional panels to fill the cavity of a fire rated door. Handling and assembling a single panel is easier and more efficient than dealing with multiple different panels. In addition, the provision of a single or unitary panel having dimensions that can fill the entire cavity of a door avoids the risk of a point of weakness or a thermal bridge in the insulation that would occur at the abutments of separate but adjoining panels. The panel may be substantially rectangular; it may be provided with preformed cuts and/or cut-outs to facilitate its assembly in a door cavity. The panel may be provided as a single or as a multilayer arrangement, for example of two or more superposed panels.

The dimensions of the composite fibre panel may be:
- height ≥ 160 cm, optionally ≥ 180 cm or ≥ 200 cm and/or ≤ 300 cm, optionally ≤ 260 cm or ≤ 230 cm;
- width ≥ 60 cm, optionally ≥ 70 cm or ≥ 80 cm and/or ≤ 200 cm, optionally ≤ 140 cm or ≤ 100 cm;
- thickness preferably ≥ 1 cm, optionally ≥ 1,5 cm or ≥ 2 cm and/or preferably ≤ 12 cm, optionally ≤ 10 cm or ≤ 8 cm

The composite fibre panel is particularly suited for use in doors, particularly in fire rated doors and even more particularly in doors meeting a Ei 30, Ei45 or Ei 60, fire class. The doors may be functional doors. In one embodiment, the doors comprise peripheral wooden skins or wooden external panels or cover plates which define an internal door cavity in which the composite fibre panel is arranged. Each wooden cover plate may have a thickness ≥ 2 mm, notably ≥ 2.5 mm or ≥ 3 mm and/or ≤ 8 mm notably ≤ 5 mm or ≤ 4.5 mm. The cover plates may be of chipboard or medium density fibre board (MDF) and may comprise a veneer.

In an alternative embodiment the doors comprise peripheral sheet metal skins or sheet metal external panes, notably of steel, which define an internal door cavity in which the composite fibre panel is arranged.

The doors may have a door leaf thickness ≥ 30 mm, notably ≥ 35 mm or ≥ 40 mm and/or ≤ 100 mm notably ≤ 75 mm or ≤ 50 mm. The door leaf weight in kg/m² may be thickness ≥ 10, notably ≥ 15 or ≥ 20 and/or ≤ 100 notably ≤ 70 or ≤ 40.

The density of the composite fibre panels may be:
- at least 300 kg/m³; notably at least 400 kg/m³ or at least 500 kg/m³; and/or
- not more than 800 kg/m³, notably not more than 700 kg/m³ or 600 kg/m³.

The polymeric material in the form of a foam may have a density ≤ 60 kg/m³, ≤ 50 kg/m³, or notably ≤ 40 kg/m³; it may have a density ≥5 kg/m³, ≥10 kg/m³ or notably ≥20 kg/m³. Foams having such densities may be referred to as "light foams". The composite fibre panels may comprise a hard foam, for example a foam having a density ≥60 kg/m³, ≥80 kg/m³ or notably ≥100 kg/m³ and/or ≤ 160 kg/m³, or notably ≤ 150 kg/m³.

Such densities may contribute to the compressive strength and/or fire performance and thus facilitate use in doors, floor applications and/or sandwich panels for structural applications.

The compressive strength of the composite fibre panels may be at least 300 kPA, notably at least 350 kPA, at least 400 kPA, at least 450 kPA or at least 500 kPA when tested according EN 826. Such compressive strength facilitates use in doors and/or sandwich panels for structural applications.

The thickness of the composite fibre panels may be at least 15mm, notably at least 20mm, at least 25 mm, at least 30mm, at least 40mm or at least 50mm; it may be no more than 250 mm, notably no more than 200 mm. Such thicknesses are suitable for use in doors and/or sandwich panels for structural applications.

The thermal conductivity of the composite fibre panels may be less than 0.130 W/mK, notably less than 0.110 W/mK, less than 0.105 W/mK, less than 0.100 W/mK, preferably less than 0.095 W/mK.

The composite fibre panels may also comprise one or more additives for example: small stones (dolomites, quartz sand), paper. Such additives may be derived from recycled materials and/or provided in particulate form, notably having a mean geometric diameter ≥ 0.1 mm or ≥ 0.2mm or ≥ 0.5mm or ≥ 1 mm or ≥ 2mm and/or ≤ 10mm or ≤ 5mm.

The presence of the polymeric material preferably reduces sound transmission in the range from 50 to 5000Hz. The characteristic(s) (notably diameter, length, density, composition, quantity) of the polymeric material in particulate form, of the polymeric material in the form of the foam of the mineral fibres or of the additives and the characteristic of the composite fibre panel (thickness) may be used to control the sound transmission of the composite fibre panel. Any combination of these different characteristics may be used to control the amplitude and/or and frequency of sound transmitted through the panel.

The invention also relates to doors and panels which comprise composite fibre panels according to the invention.

Such doors and panels may have:
- a sound insulation category of at least SSK3, preferably SSK2, more preferably SSK1; and/or
- a sound isolation on the facility RW,R (DIN 4109) of at least 35-39 dB, preferably 30-34 dB, more preferably 25-29 dB; and/or
- a laboratory sound isolation Rw (EN ISO 140-3) of at least minimum 42 dB, preferably minimum 37 dB, more preferably minimum 32 dB;
particularly for doors or panels comprising the construction:
wooden facing 2-6 mm thick (notably about 3-4.5mm thick) /composite fibre panel 15-60 mm thick (notably about 25-50 mm thick, particularly 30-45 mm thick)/ wooden facing 2-6 mm thick (notably about 3-4.5mm thick).

Embodiments of the invention will now be described, by way of example only.

Composite fibre boards were produced having the following compositions:

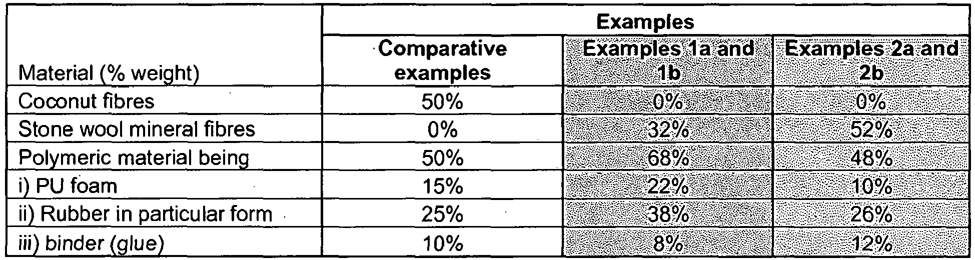

and the following properties:

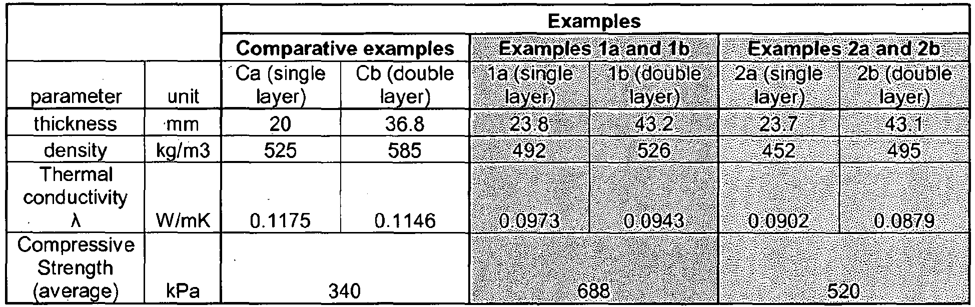

The boards were produced by thoroughly mixing the materials together and allowing the binder to cure. Due to the thorough mixing, the mineral fibres and the polymeric material are present through the core of the board, and preferably through the entire thickness of the board.

Two sandwich panels were produced, each having a thin steel sheet 1,0 mm thick adhered to each major surface of a fibre board in accordance with example 2a. When assembled, these sandwich panels had a core thickness of 20mm. When subjected to a fire resistance test according to EN 1363-1 these panels achieved a fire rating of 37 minutes. By comparison, a similar sandwich panel constructed with a core according to Comparative example Cb started burning after 15 minutes when subjected to this test.

## Claims

1. A composite fibre panel having a core comprising:
between 20% and 70% by weight of mineral fibres; and
between 30% and 80% by weight of polymeric material;
and in which the polymeric material comprises (i) polymeric material in particulate form selected from the group consisting of, rubber(s), natural rubber(s), synthetic rubber(s), polyurethane, elastomer(s) and mixtures thereof and (ii) polymeric material in the form of a foam.

2. A composite fibre panel in accordance with any preceding claim, in which the panel comprises between 10% and 30% by weight foam, preferably polyurethane foam.

3. A composite fibre panel in accordance with any preceding claim, in which the panel comprises between 10% and 30% by weight of polymeric material in particulate form.

4. A composite fibre panel in accordance with any preceding claim, in which the panel comprises an additional binder, notably making up between 5% and 15% by weight of the panel.

5. A composite fibre panel in accordance with any preceding claim, in which mineral wool fibres are stone wool fibres having an average diameter in the range of 2-10 µm and an average length in the range 2-30 mm.

6. A composite fibre panel in accordance with any preceding claim, in which the composite fibre panel has a thickness of at least 15mm, preferably at least 20 mm.

7. A composite fibre panel in accordance with any preceding claim, in which the composite fibre panel has a height of at least 160 cm and a width of at least 60cm.

8. A composite fibre panel in accordance with any preceding claim, in which the composite fibre panel has a density in the range 300 kg/m³ to 800 kg/m³.

9. A composite fibre panel in accordance with any preceding claim, in which the composite fibre panel has a compression strength of at least 300 kPa.

10. A composite fibre panel in accordance with any preceding claim, in which the composite fibre panel has a thermal conductivity of not more than 0.130 W/mK.

11. A panel comprising a composite fibre panel in accordance with any proceeding claim having a sheet material secured to each of its two major surfaces, notably , in which the composite fibre panel is sandwiched between two sheet plates selected from wooden plates and metal plates.

12. A panel in accordance with claim 11, in which the sandwich panel has a fire class of at least Ei30.

13. A door comprising a composite fibre panel in accordance with any of claims 1 to 12 and having a fire class of at least Ei30.

14. A door comprising a composite fibre panel in accordance with any of claims 1 to 12, in which the door has
• a sound insulation category of at least SSK3, preferably SSK2, more preferably SSK1; and/or
• a sound isolation RW,R (DIN 4109) of at least 35-39 dB, preferably 30-34 dB, more preferably 25-29 dB; and/or
• a laboratory sound isolation RW (EN ISO 140-3) of at least minimum 42 dB, preferably minimum 37 dB, more preferably minimum 32 dB;

15. A method for manufacturing a composite fibre panel comprising thoroughly mixing:
a) between 20% and 70% by weight of mineral fibres; and
b) between 30% and 80% by weight of polymeric material in which the polymeric material comprises polymeric material in particulate form and polymeric material in the form of a foam; and
c) a binder;
and allowing the binder to cure.

## Patentansprüche

1. Kompositfaserplatte mit einem Kern, umfassend:
zwischen 20 Gew.-% und 70 Gew.-% Mineralfasern, und
zwischen 30 Gew.-% und 80 Gew.-% polymeres Material,
und worin das polymere Material (i) polymeres Material in teilchenförmiger Form, ausgewählt aus der Gruppe, bestehend aus Gummi(s) bzw. Kautschuk(en), natürlichen Gummi(s) bzw. Kautschuk(en), synthetischen Gummi(s) bzw. Kautschuk(en), Polyurethan, Elastomeren und Gemischen davon, und (ii) polymeres Material in der Form eines Schaums umfaßt.

2. Kompositfaserplatte gemäß einem vorhergehenden Anspruch, worin die Platte zwischen 10 Gew.-% und 30 Gew.-% Schaum, vorzugsweise Polyurethanschaum, umfaßt.

3. Kompositfaserplatte gemäß einem vorhergehenden Anspruch, worin die Platte zwischen 10 Gew.-% und 30 Gew.-% polymeres Material in teilchenförmiger Form umfaßt.

4. Kompositfaserplatte gemäß einem vorhergehenden Anspruch, worin die Platte ein zusätzliches Bindemittel, insbesondere zwischen 5 Gew.-% und 15 Gew.-% bezüglich der Platte ausmachend, umfaßt.

5. Kompositfaserplatte gemäß einem vorhergehenden Anspruch, worin Mineralwollefaser Steinwollefasern mit einem durchschnittlichen Durchmesser im Bereich von 2-10 µm und einer durchschnittlichen Länge in dem Bereich von 2-30 mm sind.

6. Kompositfaserplatte gemäß einem vorhergehenden Anspruch, worin die Kompositfaserplatte eine Dicke von mindestens 15 mm, vorzugsweise mindestens 20 mm, aufweist.

7. Kompositfaserplatte gemäß einem vorhergehenden Anspruch, worin die Kompositfaserplatte eine Höhe von mindestens 160 cm und eine Breite von mindestens 60 cm aufweist.

8. Kompositfaserplatte gemäß einem vorhergehenden Anspruch, worin die Kompositfaserplatte eine Dichte in dem Bereich von 300 kg/m³ bis 800 kg/m³ aufweist.

9. Kompositfaserplatte gemäß einem vorhergehenden Anspruch, worin die Kompositfaserplatte eine Druckfestigkeit von mindestens 300 kPa aufweist.

10. Kompositfaserplatte gemäß einem vorhergehenden Anspruch, worin die Kompositfaserplatte eine thermische Leitfähigkeit von nicht mehr als 0,130 W/mK aufweist.

11. Platte, umfassend eine Kompositfaserplatte gemäß einem vorhergehenden Anspruch mit einem Lagenmaterial, befestigt an jede von dessen zwei Haupt-oberflächen, insbesondere worin die Kompositfaserplatte zwischen zwei Lagenplatten, ausgewählt aus Holzplatten und Metallplatten, gelegt ist.

12. Platte gemäß Anspruch 11, worin die Sandwichplatte eine Feuerwiderstandsklasse von mindestens Ei30 aufweist.

13. Tür, umfassend eine Kompositfaserplatte gemäß einem der Ansprüche 1 bis 12 und mit einer Feuerwiderstandsklasse von mindestens Ei30.

14. Tür, umfassend eine Kompositfaserplatte gemäß einem der Ansprüche 1 bis 12, wobei die Tür aufweist
• ein Schalldämm-Maß von mindestens SSK3, vorzugsweise SSK2, mehr bevorzugt SSK1, und/oder
• eine Schalldämmung RW, R (DIN 4109) von mindestens 35-39 dB, vorzugsweise 30-34 dB, mehr bevorzugt 25-29 dB, und/oder
• eine Laborschalldämmung RW (EN ISO 140-3) von mindestens Minimum 42 dB, vorzugsweise Minimum 37 dB, mehr bevorzugt Minimum 32 dB.

15. Verfahren zur Herstellung einer Kompositfaserplatte, umfassend gründliches Mischen von:
a) zwischen 20 Gew.-% und 70 Gew.-% Mineralfasern, und
b) zwischen 30 Gew.-% und 80 Gew.-% polymeres Material, worin das polymere Material polymeres Material in teilchenförmiger Form und polymeres Material in der Form eines Schaums umfaßt, und
c) einem Bindemittel,
und Zulassen, daß das Bindemittel härtet.

## Revendications

1. Un panneau composite fibreux ayant un noyau comprenant :
entre 20 % et 70 % en poids de fibres minérales ; et
entre 30 % et 80 % en poids de matériau polymérique ;
et dans lequel le matériau composite comprend (i) un matériau polymérique sous forme particulaire sélectionné parmi le groupe consistant en un(des) caoutchouc(s), un(des) caoutchouc(s) naturel(s), un(des) caoutchouc(s) synthétique(s), du polyuréthanne, un(des) élastomère(s) et des mélanges de ceux-ci et (ii) un matériau polymérique sous la forme d'une mousse.

2. Un panneau composite fibreux selon l'une quelconque des revendications précédentes, dans lequel le panneau comprend entre 10 % et 30 % en poids de mousse, de préférence de la mousse de polyuréthanne.

3. Un panneau composite fibreux selon l'une quelconque des revendications précédentes, dans lequel le panneau comprend entre 10 % et 30 % en poids de matériau polymérique sous forme particulaire.

4. Un panneau composite fibreux selon l'une quelconque des revendications précédentes, dans lequel le panneau comprend un liant supplémentaire, représentant notamment entre 5 % et 15 % en poids du panneau.

5. Un panneau composite fibreux selon l'une quelconque des revendications précédentes, dans lequel des fibres de laine minérale sont des fibres de laine de roche ayant un diamètre moyen dans la gamme de 2-10 µm et une longueur moyenne dans la gamme de 2-30 mm.

6. Un panneau composite fibreux selon l'une quelconque des revendications précédentes, dans lequel le panneau composite fibreux a une épaisseur d'au moins 15 mm, de préférence d'au moins 20 mm.

7. Un panneau composite fibreux selon l'une quelconque des revendications précédentes, dans lequel le panneau composite fibreux a une hauteur d'au moins 160 cm et une largeur d'au moins 60 cm.

8. Un panneau composite fibreux selon l'une quelconque des revendications précédentes, dans lequel le panneau composite fibreux a une densité dans la gamme de 300 kg/m³ à 800 kg/m³.

9. Un panneau composite fibreux selon l'une quelconque des revendications précédentes, dans lequel le panneau composite fibreux a une résistance à la compression d'au moins 300 kPa.

10. Un panneau composite fibreux selon l'une quelconque des revendications précédentes, dans lequel le panneau composite fibreux a une conductivité thermique de pas plus de 0,130 W/mK.

11. Un panneau composite fibreux selon l'une quelconque des revendications précédentes ayant un matériau sous forme de feuille fixé sur chacune de ses surfaces principales, notamment, dans lequel le panneau composite fibreux est pris en sandwich entre deux plaques en forme de feuille sélectionnées parmi des plaques en bois et des plaques en métal.

12. Un panneau selon la revendication 11, dans lequel le panneau sandwich a une classe de résistance au feu d'au moins Ei30.

13. Une porte comprenant un panneau composite fibreux selon l'une quelconque des revendications 1 à 12 et ayant une classe de résistance au feu d'au moins Ei30.

14. Une porte comprenant un panneau composite fibreux selon l'une quelconque des revendications 1 à 12, dans laquelle la porte a
- une catégorie d'isolation acoustique d'au moins SSK3, de préférence SSK2, plus préférablement SSK1 ; et/ou
- une isolation acoustique RW,R (DIN 4109) d'au moins 35-39 dB, de préférence 30-34 dB, plus préférablement 25-29 dB ; et/ou
- une isolation acoustique en laboratoire RW (EN ISO 140-3) d'au moins au minimum 42 dB, de préférence au minimum 37 dB, plus préférablement au minimum 32 dB.

15. Une méthode de fabrication d'un panneau composite fibreux comprenant le mélange intime de :
a) entre 20 % et 70 % en poids de fibres minérales ; et
b) entre 30 % et 80 % en poids de matériau polymérique dans lequel le matériau polymérique comprend du matériau polymérique sous forme particulaire et du matériau polymérique sous forme d'une mousse ; et
c) un liant ;
et permettant au liant de durcir.
